# EUROPÄISCHE PATENTSCHRIFT

(11) **EP 3 752 438 B1**
(45) Veröffentlichungstag und Bekanntmachung des Hinweises auf die Patenterteilung: **01.03.2023**
(21) Anmeldenummer: 19701497.0
(22) Anmeldetag: 22.01.2019
(51) Int. Cl.: B65G 47/08, B65G 47/71, B65G 47/86

(54) **VORRICHTUNG UND VERFAHREN ZUM ZUFÜHREN EINER BEHÄLTERGRUPPE AN EINE GETAKTETE BEHANDLUNGSMASCHINE**
DEVICE AND METHOD FOR FEEDING A CONTAINER GROUP TO A CLOCKED PROCESSING MACHINE
DISPOSITIF ET PROCÉDÉ D'ACHEMINEMENT D'UN GROUPE DE RÉCIPIENTS À UNE MACHINE DE TRAITEMENT CADENCÉE

(30) Priorität: 16.02.2018 DE 102018103533
(43) Veröffentlichungstag der Anmeldung: 23.12.2020
(73) Patentinhaber: KHS GmbH, 44143 Dortmund (DE)
(72) Erfinder: SINGUR, Igor, 55545 Bad Kreuznach (DE); NIEHR, Thomas, 55583 Bad Münster am Stein Ebernburg (DE)
(86) Internationale Anmeldenummer: PCT/EP2019/051462
(87) Internationale Veröffentlichungsnummer: WO 2019/158321

(56) Entgegenhaltungen:
- WO-A1-2016/052104
- DE-A1-102011 007 935
- DE-A1-102013 106 742
- DE-A1-102013 219 847
- JP-A- 2015 020 858

## Beschreibung

Die Erfindung bezieht sich auf eine Vorrichtung und ein zugehöriges Verfahren zum gruppenweisen Entnehmen von Behältern aus einem kontinuierlichen Behälterstrom und zum Zuführen einer Behältergruppe an eine getaktete Behandlungsmaschine.

Der prinzipielle Aufbau und die Funktionsweise von Behälterbehandlungsmaschinen oder - anlagen, insbesondere Füllsystemen oder Füllanlagen in der Getränkeindustrie sind hinlänglich bekannt.

Insbesondere sind Füllsysteme oder Füllanlagen bekannt, denen gruppenweise von einer Einlaufvorrichtung ein einreihiger Behälterstrom quer zur Transportrichtung zugeführt wird, und zwar in Form einer getakteten Querbewegung. Die den einreihigen, kontinuierlichen Behälterstrom bildenden Behälter, insbesondere Flaschen werden von einer Linearmaschine aufgenommen und in der Füllanlage gleichzeitig gruppenweise behandelt, insbesondere befüllt. US 6,945,013 B2, US 4,742,667, DE 10 2005 032 322 A1 oder DE 10 2007 016 159 A1 zeigen derartige lineare, getaktete Füllmaschinen für Behälter bzw. Behältergruppen.

Weiterhin ist aus der DE 10 2011 007 935 A1 eine Vorrichtung nach dem Oberbegriff von Anspruch 1 mit einem Verteilersystem aus drei Sternen bekannt, bei welchem über einen zentralen Transportstern die Behälter einreihig herangeführt werden und nachfolgend an zwei Transportsterne übergeben werden. Diese nachlaufenden Transportsterne übergeben die Behälter dann in Einzelgassen. Für die Übergabe der Behälter an die beiden nachlaufenden Transportsterne müssen geeignete, aktive Rückhalte- und/oder Übergabemittel für die Behälter an den beiden Übergabestellen vorgesehen werden, was konstruktiv nachteilig ist. Ein vergleichbares System aus drei Transportsternen ist aus der DE 31 41 364 A1 bekannt.

Die Zuführung der Behälter an derartige Füllanlagen bzw. die mit dieser zusammenwirkenden Einlaufvorrichtung erfolgt in der Regel im so genannten "Lufttransport", d.h. die Behälter werden in Form einer Behälterreihe oder eines Behälterstroms entlang einer Transportbahn in hängender Weise transportiert, wobei entlang der Transportbahn Aufnahmeeinrichtungen bzw. Greifer vorgesehen sind, die zum Aufnehmen und Halten der zu transportierenden Behälter im Bereich des Behälterhalses eingerichtet sind. Insbesondere bei in Form von PET-Flaschen ausgebildeten Behältern erfolgt die hängende Halterung im Bereich des Neckringes.

Beim Zuführen der Behälter im "Luftransport" ist auch eine Unterbrechung der Einlaufeinrichtung bzw. ein getakteter Betrieb möglich, um die Behälter gruppenweise in Form einer getakteten Querbewegung von einem linearen Transportabschnitt der Einlaufvorrichtung aufzunehmen und an eine Transfervorrichtung mit mehreren Aufnahmeplätzen zu übergeben.

Bei einer kontinuierlichen Zuführung der Behälter über eine beispielsweise rotativ arbeitende Zulauf- bzw. Einlaufvorrichtung, beispielsweise über eine Zuleitsterneinrichtung ist jedoch eine Unterbrechung der Einlaufvorrichtung nachteilig nicht mehr möglich. Ausgehend hiervon liegt der vorliegenden Erfindung die Aufgabe zu Grunde, eine Vorrichtung und ein zugehöriges Verfahren zum gruppenweisen Zuführen von Behältern an eine getaktete Behandlungsmaschine anzugeben, die bei einem insbesondere einfachen Aufbau eine gruppenweise Entnahme von Behältern aus einem durch einzeln und hängend transportierten Behältern gebildeten kontinuierlichen Behälterstrom erlaubt und die gleichzeitig die gruppenweise Zuführung der Behälter an die getaktete Behandlungsmaschine ermöglicht. Diese Aufgabe wird ausgehend von den Merkmalen des Oberbegriffes des Patentanspruches 1 durch dessen kennzeichnende Merkmale gelöst. Ebenfalls ist Gegenstand der Erfindung ein Verfahren gemäß dem Patentanspruch 14. Die Unteransprüche betreffen besonders bevorzugte Ausführungsvarianten der Erfindung.

Die vorliegende Erfindung stellt eine Vorrichtung gemäß Anspruch 1 zum gruppenweisen Entnehmen von Behältern aus einem kontinuierlichen Behälterstrom und zum Zuführen einer Behältergruppe mit einer vorgegebenen Behälterzahl an eine getaktete Behandlungsmaschine zur Verfügung. Dabei ist unter einer Behältergruppe nachfolgend eine Anzahl von Behältern von zwei oder mehr Behältern, insbesondere einer Behältergruppen von sechs oder mehr Behältern zu versehen, die bestimmt sind, zeitgleich in eine Behandlungsmaschine überführt zu werden und/oder als Gruppe zur selben Behandlungsstation der Behandlungsmaschine transportiert zu werden und/oder zeitgleich oder im Wesentlichen zeitgleich an einer Behandlungsstation behandelt zu werden. Dabei kann beispielsweise eine Behandlungsstation insbesondere eine Besprühungsstation, eine Trocknungsstation, eine Befüllungsstation und/oder eine Verschließerstation sein, wobei eine oder mehrere Behandlungsstationen der selben Art vorgesehen sein kann.

Die erfindungsgemäße Vorrichtung umfasst wenigstens eine Einlaufvorrichtung, zumindest eine Linearzuführeinheit mit wenigstens einem ersten Linearstreckenabschnitt und eine Transfervorrichtung, wobei die Einlaufvorrichtung wenigstens eine Hauptzuleitungseinheit und zumindest einen ersten und zweiten Sternverteiler aufweist. Die Hauptzuleitungseinheit weist zum hängenden Transport der Behälter in Form eines kontinuierlichen Behälterstromes eine Vielzahl an Trag- und Halteelementen auf und ist derart eingerichtet und angeordnet, dass zur Übergabe von Behältern aus dem Behälterstrom an den ersten Sternverteiler ein erster Übergabebereich und zur Übergabe von Behältern an den zweiten Sternverteiler ein zweiter Übergabebereich definiert ist. Zumindest der erste Sternverteiler ist dazu eingerichtet, die von der Hauptzuleitungseinheit im ersten Übergabebereich aus dem Behälterstrom entnommenen Behälter an den ersten Linearstreckenabschnitt der Linearzuführeinheit zu übergeben.

Ein wesentlicher Aspekt der erfindungsgemäßen Vorrichtung ist darin zu sehen, dass zumindest der erste Sternverteiler zur gruppenweisen Aufnahme der Behälter aus dem kontinuierlichen Behälterstrom entlang seines Umfanges wenigstens einen Aufnahmeabschnitt mit einer Anzahl an Trag- und Halteelementen aufweist, dass sich an den wenigstens einen Aufnahmeabschnitt des ersten Sternverteilers entlang des Umfanges ein unbesetzter Leerabschnitt zur Unterbrechung der Behälteraufnahme anschließt, und das die Anzahl der Trag- und Halteelemente des wenigstens einen Aufnahmeabschnittes der vorgegebenen Behälterzahl einer Behältergruppe entspricht, d.h. die Anzahl an Trag- und Halteelementen des wenigstens einen Aufnahmeabschnittes ist auf die Behälterzahl einer Behältergruppe abgestimmt.

Besondere Vorteile ergeben sich insbesondere durch die entsprechende Ausgestaltung des ersten Sternverteilers mit einem mit einer bestimmten, vorgegebenen Anzahl an Trag- und Halteelementen besetzten Aufnahmeabschnitt und einem daran anschließenden unbesetzten Leerabschnitt. Die im Aufnahmeabschnitt unmittel hintereinander entlang des Umfanges angeordneten Trag- und Halteelemente bilden somit eine Gruppe von Trag- und Halteelementen aus. Darunter ist vorliegend insbesondere zu verstehen, dass der erste Sternverteiler nur über einen Teil seines Umfangs, somit also nur über einen Teilumfang, mit Trag- und Halteelementen ausgestattet ist, welche wiederum gruppenweise, nämlich als Gruppe angeordnet sind. Der unbesetzte oder freie Leerabschnitt ist als Abschnitt des Umfanges bzw. als Teilumfang zu verstehen, in dem keine Trag- und Halteelemente angeordnet sind, d.h. der nicht zur Aufnahme von Behältern aus der Hauptzuleiteinrichtung im ersten Übergabebereich eingerichtet ist.

Gemäß dem vorliegenden Verständnis sind die Trag- und Halteelemente bei dem ersten Sternverteiler derart an einem Sternteller befestigt, dass sie über einen Umfang des Sterntellers hinausragen und quasi nach außen hin über den Umfang des Sterntellers, vorzugsweise in radialer Richtung überstehen bzw. umfangsseitig von dem Sternteller nach außen abstehen.

Bei Rotation des ersten Sternverteilers befinden sich im Zeitverlauf somit der Aufnahmeabschnitt und der Leerabschnitt abwechselnd bzw. hintereinander folgend im ersten Übergabebereich, nämlich in dem Kontaktbereich zwischen der Hauptzuleitungseinheit und dem ersten Sternverteiler. Eine Übergabe von Behältern von der Hauptzuleitungseinheit an den ersten Sternverteiler bzw. eine Entnahme von Behältern aus dem Behälterstrom mittels des ersten Sternverteilers kann dabei nur erfolgen, wenn sich der Aufnahmeabschnitt des Sternverteilers im bzw. am ersten Übergabebereich befindet, nämlich wenn im ersten Übergabebereich Trag- und Halteelemente des ersten Sternverteilers für die Auf- bzw. Übernahme von Behältern zur Verfügung stehen.

Sofern der Leerabschnitt des ersten Sternverteilers im Übergabebereich angeordnet ist, durchlaufen die Behälter den ersten Übergabebereich und zwar verbleibend an den Trag- und Halteelementen der Hauptzuleitungseinheit und laufen in den zweiten Übergabebereich ein, wo sie an den zweiten Sternverteiler übergeben werden.

Durch die gruppenweise Anordnung der Trag- und Halteelemente und durch die entsprechend vorgegebene Anzahl der Trag- und Halteelemente in einer solchen Gruppe wird besonders vorteilhaft ermöglicht eine Behältergruppe mit vorgegebener Behälterzahl, nämlich eine Behältergruppe in einer vorgegebenen Gruppengröße, aus dem Behälterstrom zu entnehmen und an den ersten Linearstreckenabschnitt der Linearzuführeinheit zu übergeben. Zwar erfolgt die Übergabe jedes Behälters einzeln, jedoch als Gruppe aus dem Behälterstrom, nämlich gruppiert aus im Behälterstrom direkt aufeinander folgenden Behältern. Dadurch wird die Behälterzahl der Behältergruppe bereits bei Entnahme aus dem Behälterstrom am ersten Übergabebereich eingehalten und zwar bestimmt durch die Anzahl der Trag- und Halteelemente in einer derartigen Gruppe der Trag- und Halteelemente des ersten Sternverteilers.

Die Behälterzahl der Behältergruppe entspricht dabei der Anzahl an Behältern, die mittels der Transfervorrichtung von der Linearzuführeinheit in die Behandlungsmaschine überführt werden können und die in einer Taktung in der Behandlungsmaschine bearbeitet werden. Dies bedeutet, dass die Behälterzahl der Behältergruppe und damit die Anzahl der Trag- und Halteelemente in einer im Aufnahmeabschnitt angeordneten Gruppe von Trag- und Halteelementen, nämlich in einer Trag- und Halteelementgruppe an die Zahl an Transferplätzen bzw. Aufnahmeplätzen der Transfervorrichtung sowie an die Zahl der Behandlungsplätze bzw. Aufnahmeplätzen in der Behandlungsmaschine angepasst, vorzugsweise identisch zu diesen.

Ganz besonders vorteilhaft erfolgt mit der vorliegenden Erfindung die gruppenweise Entnahme der Behälter aus dem Behälterstrom auf insbesondere einfache Weise und ergibt sich quasi automatisch, nämlich lediglich durch die rotativen Bewegungen der einzelnen Einheiten der Einlaufvorrichtung, und zwar insbesondere ohne dass hierzu eine Steuerung oder Regelung von Trag- und Halteelementen des Sternverteilers notwendig wäre. Für die Trag- und Halteelemente ist dabei keine Verstellung oder Einstellung vorgesehen bzw. notwendig. Die Trag- und Halteelemente werden weder in radialer Richtung noch in einer Richtung entlang des Umfanges bewegt bzw. verstellt und nehmen somit keine unterschiedlichen Arbeitspositionen ein. Gemäß der Erfindung verbleiben die Trag- und Halteelemente in fester Einstellung bzw. in fixierter Position relativ zum Sternteller und können daher besonders vorteilhaft als unbewegliche Trag- und Halteelemente ausgeführt sein, die daher beispielsweise keiner komplizierten oder aufwendigen Regelung unterliegen.

Vorteilhaft entspricht die Vielzahl der Trag- und Halteelemente der Hauptzuleitungseinheit einem ganzzahligen Vielfachen der Anzahl der Trag- und Halteelemente der Gruppe von Trag- und Halteelemente in dem zumindest einen Aufnahmeabschnitt des ersten Sternverteilers. In umgekehrter Weise bedeutet dies, dass die Anzahl der Trag- und Halteelemente einer im Aufnahmeabschnitt des ersten Sternverteilers angeordneten Gruppe einen ganzen Teiler der Vielzahl von Trag- und Halteelemente der Hauptzuleitungseinheit bildet, welcher größer ist als der Wert eins.

Weiterhin vorteilhaft ist der zweite Übergabebereich bezogen auf eine Transportrichtung des Behälterstromes hinter dem ersten Übergabebereich angeordnet und der zweite Sternverteiler ist dazu ausgebildet, alle im zweiten Übergabebereich einlaufenden Behälter von der Hauptzuleitungseinheit zu übernehmen und weiter zu transportieren. Dadurch wird sichergestellt, dass die Hauptzuleitungseinheit nach einer vollen Rotation bzw. nach einem ganzen Umlauf vollständig "entleert" wird, wodurch gleichzeitig verhindert wird, dass Behälter in einen potentiellen "Gegenverkehr" gelangen. Mögliche, durch nicht abgenommene Behälter hervorgerufene, Kollisionen werden dadurch sicher vermieden. Weiterhin vorteilhaft weist die Linearzuführeinheit zumindest einen zweiten Linearstreckenabschnitt auf, wobei der erste und zweite Linearstreckenabschnitt parallel zueinander orientiert sind, und wobei der zweite Sternverteiler dazu ausgebildet ist die von der Hauptzuleitungseinheit im zweiten Übergabebereich übernommenen Behälter an den zweiten Linearstreckenabschnitt der Linearzuführeinheit zu übergeben.

Weiterhin vorteilhaft ist der zweite Sternverteiler durch einen Taschenstern oder einen Zahnstern gebildet.

Alternativ und ebenso vorteilhaft ist der zweite Sternverteiler analog zu dem ersten Sternverteiler ausgebildet und weist zur gruppenweisen Übernahme der Behälter von der Hauptzuleitungseinheit entlang seines Umfanges wenigstens einen mit einer Gruppe an Trag- und Halteelementen ausgestatteten Aufnahmeabschnitt und zumindest einen an den Aufnahmeabschnitt anschließenden Leerabschnitt auf, wobei eine Anzahl an Trag- und Halteelementen der Gruppe auf die Behälterzahl einer Behältergruppe abgestimmt ist und vorzugsweise identisch zu der Behälterzahl einer Behältergruppe ist.

Weiterhin vorteilhaft sind im Bereich der Linearstreckenabschnitte Einteilungseinheiten vorgesehen, wobei die Einteilungseinheiten vor oder innerhalb eines Übergangsbereiches zwischen der Linearzuführeinheit und der Transfervorrichtung angeordnet sind. Die Einteilungseinheiten können beispielsweise als Einteilungsschnecken oder als Taschenketten ausgebildet sein.

Weiterhin vorteilhaft verfügen der erste und /oder zweite Sternverteiler über mehrere Aufnahmeabschnitte, wobei jeder Aufnahmeabschnitt eine Gruppe mit einer der Behälterzahl einer Behältergruppe entsprechenden Anzahl an Trag- und Halteelementen aufweist und wobei jeweils ein Leerabschnitt zwischen jeweils zwei Aufnahmeabschnitten angeordnet ist.

Bevorzugt ist die Transfervorrichtung als getaktete Transfervorrichtung ausgebildet und dazu eingerichtet jeweils eine Behältergruppe von der Linearzuführeinheit in die getaktete Behandlungsmaschine zu transferieren.

Die Vorrichtung kann bevorzugt über eine weitere, der Hauptzuleitungseinheit vorgeschaltete Zuführung verfügen, die beispielsweise als Zuführstern oder als beliebiges Zuführelement ausgebildet sein kann.

Die vorliegende Erfindung umfasst auch ein Verfahren gemäß Anspruch 11 zum gruppenweisen Entnehmen von Behältern aus einem kontinuierlichen Behälterstrom und zum Zuführen von Behältergruppen an eine getaktete Behandlungsmaschine. Bei dem Verfahren werden die Behälter mittels einer Hauptzuleitungseinheit in einem kontinuierlichen Behälterstrom entlang einer Einlaufrichtung hängend transportiert und eine Behältergruppe mit einer vorgegebenen Behälterzahl mittels eines in Einlaufrichtung hinter der Hauptzuleitungseinheit angeordneten ersten Sternverteilers aus dem Behälterstrom entnommen und auf einen ersten Linearstreckenabschnitt einer Linearzuführeinheit übergeben, wobei die auf der Linearzuführeinheit bereitgestellte Behältergruppe anschließend für die Übergabe an eine getaktete Behandlungsmaschine von einer Transfervorrichtung aufgenommen wird. Besonders vorteilhaft werden die Behälter gruppensweise aus dem kontiniuierlichen Behälterstrom mittels zumindest einen sich entlang des Umfanges des ersten Sternverteilers erstreckenden und eine vorgegebene Anzahl von Trag- und Halteelementen aufweisenden Aufnahmeabschnittes in einem ersten Übergabebereich entnommen, wobei mittels zumindest einem sich an den Aufnahmeabschnitt anschließenden, sich ebenfalls entlang des Umfanges erstreckenden Leerabschnitt des ersten Sternverteilers die Behälterentnahme unterbrochen wird und die an der Hauptzuleitungseinheit verbleibenden Behälter in einem zweiten, dem ersten Übergabebereich in Transportrichtung nachfolgenden Übergabebereich an den zweiten Sternverteiler übergeben werden.

Besonders vorteilhaft werden damit Behältergruppen dadurch erzeugt, indem der erste Sternverteiler, der entlang seines Umfanges mit zumindest einem eine Gruppe von Trag- und Halteelementen aufweisenden Aufnahmeabschnitt und zumindest einem daran anschließenden Leerabschnitt ausgebildet ist, gruppenweise, jedoch diskontinuierlich Behälter an einem ersten Übergabebereich von der Hauptzuleitungseinheit übernimmt, wobei aufgrund der Rotation des ersten Sternverteilers der Aufnahmeabschnitt und der Leerabschnitt abwechselnd den ersten Übergabebereich durchlaufen. Die Behälter werden dabei im ersten Übergabebereich von dem ersten Sternverteiler aus dem Behälterstrom entnommen, solange der Aufnahmeabschnitt des ersten Sternverteilers den ersten Übergabebereich durchläuft. Die Behälter verbleiben aber bis zu einem zweiten Übergabebereich an der Hauptzuleitungseinheit, solange der Leerabschnitt des ersten Sternverteilers den ersten Übergabebereich durchläuft. Diese Behälter werden dann im zweiten Übergabebereich an den zweiten Sternverteiler übergeben.

Die oberhalb im Zusammenhang mit der Vorrichtung bereits erläuterten Vorteile ergeben sich in gleicher Weise für das erfindungsgemäße Verfahren, so dass an dieser Stelle auf die diesbezüglichen obigen Ausführungen Bezug genommen wird.

Bevorzugt werden die vom zweiten Sternverteiler aufgenommenen Behälter an einen zweiten Linearstreckenabschnitt der Linearzuführeinheit übergeben, wobei die Behältergruppen durch die Transfervorrichtung abwechselnd und getaktet von jeweils einem der Linearstreckenabschnitte aufgenommen werden.

Der Ausdruck "im Wesentlichen" bzw. "etwa" bedeutet im Sinne der Erfindung Abweichungen vom jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an Ausführungsbeispielen näher erläutert. Es zeigen:
- Fig. 1: beispielhaft und schematisch dargestellt eine perspektivische Ansicht einer Ausführungsform der erfindungsgemäßen Vorrichtung,
- Fig. 2: eine weitere schematische Seitenansicht der erfindungsgemäßen Vorrichtung gemäß der Figur 1,
- Fig. 3: eine schematische Draufsicht der beispielhaft dargestellten erfindungsgemäßen Vorrichtung gemäß den Figuren 1 und 2,
- Fig. 4: grob schematisch dargestellt eine Draufsicht auf eine beispielhafte Ausführungsform einer Einlaufvorrichtung.

Für gleiche oder gleich wirkende Elemente der Erfindung werden in den Figuren identische Bezugszeichen verwendet. Ferner werden der Übersichtlichkeit halber nur Bezugszeichen in den einzelnen Figuren dargestellt, die für die Beschreibung der jeweiligen Figur erforderlich sind.

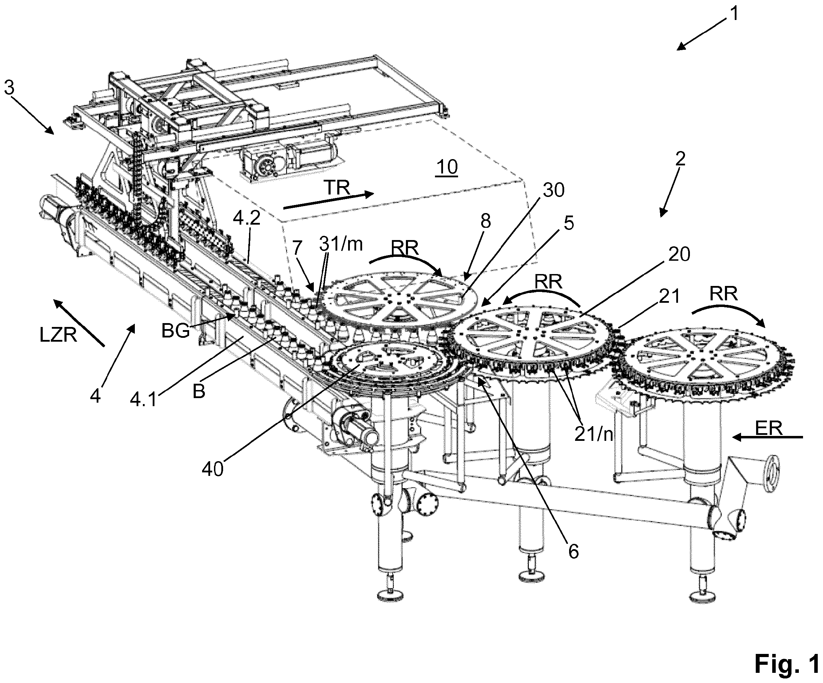

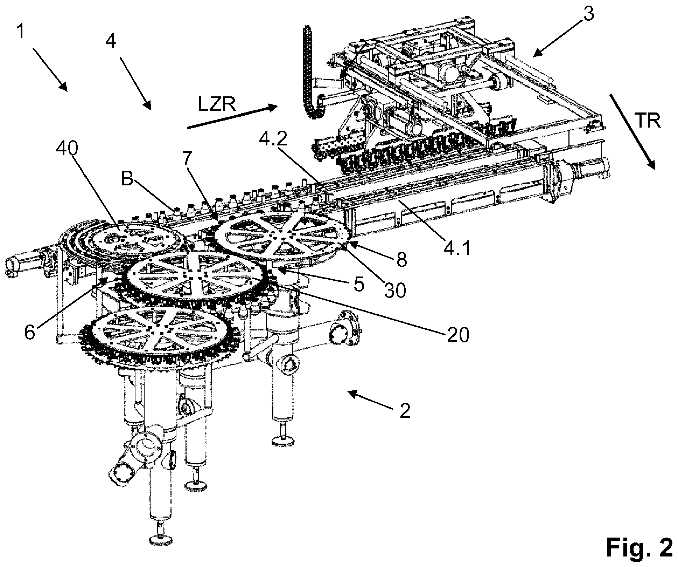

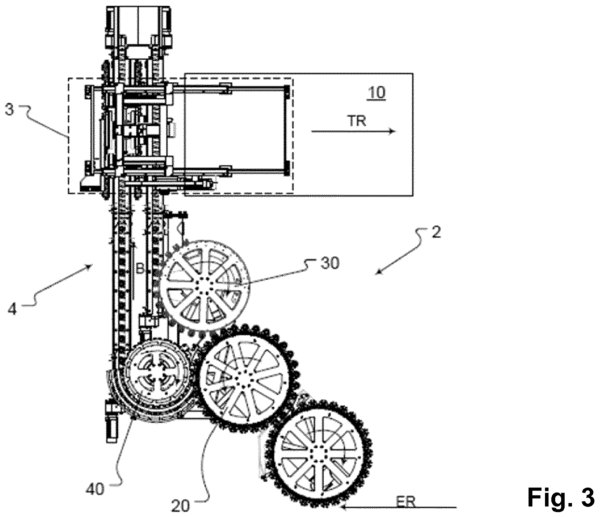

Die in den Figuren 1 bis 3 allgemein mit 1 bezeichnete erfindungsgemäße Vorrichtung dient zum gruppenweisen Entnehmen von Behältern B aus einem Behälterstrom und zum Zuführen einer Behältergruppe BG mit einer vorgegebenen Behälterzahl an eine getaktete Behandlungsmaschine 10, welche jedoch in den Figuren nicht explizit dargestellt, sondern in den Figuren 1 und 3 lediglich als Block angedeutet ist. In Figur 1 ist die Behandlungsmaschine 10 mittels eines strichliert gezeichneten Blockes dargestellt, in Figur 2 ist sie ganz weg gelassen. Die erfindungsgemäße Vorrichtung 1 kann der getakteten Behandlungsmaschine 10 vorgeschaltet oder ein Teil dieser Maschine sein.

Vorzugsweise ist die getaktete Behandlungsmaschine 10 bzw. Behälterbehandlungsmaschine als getaktete Füllmaschine oder Füllanlage ausgebildet, mittels der ein gruppenweises Befüllen von Behältern B erfolgt. Insbesondere so genannten Linearfüllern, beispielsweise im Schrittbetrieb arbeitenden Linearfüllern, werden die Behälter B in Form von Behältergruppen BG zum Füllen zugeführt, wobei eine Behältergruppe BG eine Vielzahl von in einer linearen Reihe beabstandet zueinander angeordnete Behälter B aufweist. Die Behälter B einer Behältergruppe BG sind relativ zueinander so angeordnet, dass Behälterlängsachsen der Behälter B vorzugsweise parallel zueinander verlaufen und jeweils denselben Abstand aufweisen. Eine Behältergruppe BG umfasst dabei eine vorgegebene Behälterzahl, die vorliegend auch als Gruppenanzahl oder Gruppengröße verstanden werden kann. Die Behälterzahl der Behältergruppe BG entspricht dabei der Anzahl bzw. Zahl der in der Behandlungsmaschine 10 vorhandenen Behandlungsplätze.

Im vorliegenden Ausführungsbeispiel gemäß den Figuren 1 bis 3 umfasst die erfindungsgemäße Vorrichtung 1 eine Einlaufvorrichtung 2, eine Linearzuführeinheit 4 sowie eine Transfervorrichtung 3. Über die Einlaufvorrichtung 2 laufen die Behälter B in einem zunächst kontinuierlichen Behälterstrom in einer Einlaufrichtung ER in die Vorrichtung 1 ein und Behältergruppen BG können aus dem Behälterstrom abgetrennt werden, wobei der kontinuierliche Behälterstrom gewissermaßen unterbrochen oder geteilt wird. Die aus dem Behälterstrom entnommenen Behälter B bzw. Behältergruppen BG werden anschließend an die Linearzuführeinheit 4 übergeben, mittels der die Behälter B in einer Linearzuführrichtung LZR weiter transportiert und für die Übernahme durch die Transfervorrichtung 3 bereitgestellt werden. Mittels der Transfervorrichtung 3 werden die Behälter B schließlich getaktet an die Behandlungsmaschine 10 übergeben, und zwar in einer quer zur Linearzuführrichtung LZR verlaufenden Transferrichtung TR.

Die Einlaufvorrichtung 2 umfasst eine in Form eines in einer Rotationsrichtung RR rotierenden Einlaufsterns ausgebildete Hauptzuleitungseinheit 20 und einen ersten und zweiten Sternverteiler 30, 40, wobei die Sternverteiler 30, 40 ebenfalls in einer Rotationsrichtung RR rotieren und bezogen auf die Einlaufrichtung ER bzw. bezogen auf eine Transportrichtung der Behälter B, hinter der Hauptzuleitungseinheit 20 angeordnet sind. Die Hauptzuleitungseinheit 20 sowie auch die Sternverteiler 30, 40 sind hierbei zum hängenden Transport der Behälter B ausgebildet. Wie aus den Figuren 1 bis 3 hervorgeht, kann in Einlaufrichtung ER vor der Hauptzuleitungseinrichtung 20 eine weitere Zuführung angeordnet sein, die beliebig ausgeführt sein kann und im Beispiel durch einen Zulaufstern gebildet ist.

Die als Einlaufstern ausgebildete Hauptzuleitungseinheit 20 weist eine Vielzahl n von Trag- und Halteelementen 21 auf, über die die Behälter B während des Transports gehalten sind. Die Vielzahl n von Trag- und Halteelementen 21 sind entlang eines Umfangs des Einlaufsterns 20 angeordnet und zwar gleichmäßig sowie in gleichen Abständen, insbesondere in gleichen Winkelabständen zueinander über den Umfang verteilt, wobei die Trag- und Halteelemente 21 derart umfangsseitig am Einlaufstern 20, insbesondere an einem Sternteller des Einlaufsterns 20 befestigt sind, dass sie vorzugsweise seitlich nach außen über einen Umfang des Sterntellers abstehen. Besonders bevorzugt sind die Trag- und Halteelemente 21 dabei in einer festen Position bzw. feststehend am Einlaufstern 20 angebracht und sind in ihrer Positionseinstellung unveränderlich. Die Trag- und Halteelemente 21 sind in an sich bekannter Weise zum Aufnehmen und Halten der zu transportierenden Behälter B im Bereich des Behälterhalses eingerichtet. Insbesondere bei in Form von PET-Flaschen ausgebildeten Behältern B erfolgt die hängende Halterung im Bereich des Neckringes der PET-Flasche. Im vorliegenden Ausführungsbeispiel sind die Behälter B durch PET-Flaschen gebildet.

In Transportrichtung der Behälter B bzw. in Richtung des Behälterstromes ist auf die Hauptzuleitungseinheit 20 folgend der erste Sternverteiler 30 angeordnet, wobei zwischen der Hauptzuleitungseinheit 20 und dem ersten Sternverteiler 30 ein erster Übergabereich 5 für die Übergabe der Behälter B von der Hauptzuleitungseinheit 20 auf den ersten Sternverteiler 30 definiert ist. Der erste Übergabebereich 5 ist dabei als Kontaktbereich oder Kontaktpunkt zu verstehen, in bzw. an dem die Übergabe der Behälter B in an sich bekannter Weise stattfindet.

Der erste Sternverteiler 30 ist zur gruppenweisen Entnahme der Behälter B aus dem Behälterstrom ausgebildet und weist dazu entlang eines Teils seines Umfanges einen Aufnahmeabschnitt 7 und entlang eines weiteren Teils seines Umfanges einen an den Aufnahmeabschnitt 7 anschließenden Leerabschnitt 8 auf, wobei der Aufnahmeabschnitt 7 eine als Gruppe angeordnete Anzahl m an Trag- und Halteelementen 31 aufweist. Der im Aufnahmeabschnitt 7 befindliche Teilumfang des ersten Sternverteilers 30 ist somit mit der Gruppe aus Trag- und Halteelementen 31 besetzt. Der Leerabschnitt 8 weist keine Trag- und Halteelemente 31 auf, so dass der im Leerabschnitt 8 befindliche Teilumfang des ersten Sternverteilers 30 frei bzw. unbesetzt ist. Die Trag- und Halteelemente 31 sind wiederum in an sich bekannter Weise zum Aufnehmen und Halten der zu transportierenden Behälter B im Bereich des Behälterhalses eingerichtet.

Die Anzahl m der im Aufnahmeabschnitt 7 gruppierten Trag- und Halteelemente 31 ist an die Behälterzahl einer Behältergruppe BG angepasst, und entspricht dieser insbesondere. Im dargestellten Beispiel der Figuren 1 bis 3 ist die Vielzahl n der Trag- und Halteelemente 21 der Hauptzuleitungseinheit 20 ein ganzzahliges Vielfaches der Anzahl m der im Aufnahmeabschnitt 7 gruppierten Trag- und Halteelemente 31 des ersten Sternverteilers 30. Umgekehrt bedeutet dies, dass die Anzahl m einer Gruppe von Trag- und Halteelementen 31 einen ganzzahligen Teiler zu der Vielzahl n der Trag- und Halteelemente 21 der Hauptzuleitungseinheit 20 darstellt. Insbesondere ist ein Wert für das Verhältnis n/m (nämlich "Trag- und Halteelemente 21 der Hauptzuleitungseinheit 207"gruppierten Trag- und Halteelemente 31 des ersten Sternverteilers 30") eine ganze Zahl, die größer als eins ist. Wie beispielhaft in der Figur 3 sichtbar weist die Hauptzuleitungseinheit 20 beispielsweise dreißig gleichmäßig über den Umfang verteilte Trag- und Halteelemente 21 auf und die Gruppe der Trag- und Halteelemente 31 im Aufnahmeabschnitt 7 des ersten Sternverteilers umfasst fünfzehn Trag- und Halteelemente 31, so dass das Verhältnis n/m hierbei zwei ist.

In einer derartigen beispielhaften Ausführung ist der erste Sternverteiler 30 somit halbumfänglich mit Trag- und Halteelementen 31 besetzt, die andere Hälfte des Umfanges ist unbesetzt. In den Figuren zwar nicht dargestellt jedoch denkbar ist auch eine Ausführungsform, in der je zwei sich gegenüberliegende Viertel des Umfanges mit Trag- und Halteelementen 31 besetzt sind und die jeweiligen dazwischenliegenden Viertel des Umfanges unbesetzt sind.

Im Betrieb laufen die Hauptzuleitungseinheit 20 wie auch die Sternverteiler 30, 40 kontinuierlich mit einer vorgegebenen, vorzugsweise konstanten Rotationsgeschwindigkeit. Es versteht sich von selbst, dass die Rotationsgeschwindigkeiten, insbesondere auch unter Berücksichtigung der jeweiligen Geometrien, in an sich bekannter Weise aufeinander abgestimmt sind. Auch wird hier vorausgesetzt, dass die jeweiligen Winkelabstände der Trag- und Halteelemente 21 und die jeweiligen Winkelabstände der in einem Aufnahmeabschnitt 7 gruppiert angeordneten Trag- und Halteelemente 31 derart aufeinander abgestimmt sind, dass die Behälter B im Übergabebereich 5 einzeln in an sich bekannter Weise von jeweils einem Trag- und Halteelement 21 auf ein Trag- und Halteelement 31 übergeben werden können.

Sofern der Aufnahmeabschnitt 7 des ersten Sternverteilers 30 den ersten Übergabebereich 5 durchläuft, werden die dort mittels der Hauptzuleitungseinheit 20 einlaufenden bzw. ankommenden Behälter B von den entsprechenden Trag- und Halteelementen 21 der Hauptzuleitungseinheit 20 auf die Trag- und Halteelementen 31 des ersten Sternverteilers 30 übergeben. Sobald aufgrund der Rotation des ersten Sternverteilers 30 in Rotationsrichtung RR der Leerabschnitt 8 in den ersten Übergabebereich 5 hineinläuft, stehen dort keine Trag- und Halteelemente 31 für eine Übernahme zur Verfügung, so dass die Behälter an den Trag- und Halteelementen 21 der Hauptzuleitungseinheit 20 verbleiben und über diese weiter transportiert werden bis zu einem zweiten Übergabebereich 6, welcher zwischen der Hauptzuleitungseinheit 20 und dem zweiten Sternverteiler 40 definiert wird. Alle im zweiten Übergabebereich 6 einlaufenden Behälter B werden dort vom zweiten Sternverteiler 40 übernommen. In der Ausführungsform der Figuren 1 bis 3 ist der zweite Sternverteiler 40 durch einen herkömmlichen Taschenstern oder Zahnstern gebildet.

Im dargestellten Beispiel wird dem Behälterstrom mittels des ersten Sternverteilers 30 eine erste Behältergruppe BG mit fünfzehn Behältern B entzogen Bei den Behältern B der ersten Behältergruppe BG handelt es sich dabei um Behälter B, die in dem Behälterstrom direkt aufeinanderfolgend transportiert wurden. In Bezug auf eine "Vollbelegung" oder vollständige Besetzung der Hauptzuleitungseinheit 20 bleiben damit fünfzehn Behälter B an der Hauptzuleitungseinheit 20 bzw. im Behälterstrom zurück. Diese restlichen fünfzehn Behälter B einer "vollständigen Besetzung" der Hauptzuleitungseinheit 20 werden über den zweiten Sternverteiler 40 weiter transportiert und bilden eine zweite Behältergruppe BG. Danach ist aufgrund der Rotation der Sternverteiler 30, 40 und der Hauptzuleitungseinheit 20 der erste Sternverteiler 30 in einem Rotationszustand in dem sich wieder der Aufnahmeabschnitt 5 des ersten Sternverteilers 30 im ersten Übergabebereich 5 befindet, so dass der Zyklus mit Entnahme einer dritten Behältergruppe BG neu beginnen kann. Der kontinuierliche Behälterstrom wird dadurch quasi in einen diskontinuierlichen Behälterstrom umgewandelt bzw. in einzelne Behälterstränge aufgeteilt.

In der dargestellten Ausführungsform der Vorrichtung 1 werden alle Behälter B von den Sternverteilern 30, 40 an die Linearzuführeinheit 4 übergeben, wobei der erste Sternverteiler 30 die auslaufenden Behältergruppen BG auf einen ersten Linearstreckenabschnitt 4.1 und der zweite Sternverteiler die auslaufenden Behältergruppen BG auf einen zweiten Linearstreckenabschnitt 4.2 übergibt, welcher parallel zum ersten Linearstreckenabschnitt 4.1 orientiert ist. Die derart an die Linearzuführeinheit 4 übergebenen Behälter B werden dort in einer Linearzuführrichtung LZR weitertransportiert und zur gruppenweisen Aufnahme durch die Transfervorrichtung 3 bereitgestellt, welche in an sich bekannter Weise auch getaktet arbeitet und dazu ausgebildet ist, Behältergruppen BG sowohl vom ersten als auch vom zweiten Linearstreckenabschnitt 4.1, 4.2 aufnehmen zu können, vorzugsweise abwechselnd von jedem der beiden Linearstreckenabschnitte 4.1, 4.2. Die von den Linearstreckenabschnitten 4.1, 4.2 mittels der Transfervorrichtung 3 aufgenommenen Behältergruppen BG werden dann in bekannter Weise in einer quer zur Linearzuführrichtung LZR verlaufenden Transferrichtung TR getaktet an die Behandlungsmaschine 10 überführt.

In dieser Weise wird ein kontinuierlich zugeführter, sich zunächst in Einlaufrichtung ER bewegender Behälterstrom in zwei Behälterstränge aufgeteilt, die im dargestellten Ausführungsbeispiel beide in Linearzuführrichtung LZR bewegt werden und insbesondere als diskontinuierliche Behälterstränge verstanden werden können. Dadurch entsteht Zeit für Stillstand im Bereich eines jeweiligen Behälterstranges, um die Behälter B schließlich blockweise getaktet entnehmen und der Behandlungsmaschine 10 zuführen zu können.

Entlang beider Linearstreckenabschnitte 4.1, 4.2 der Linearzuführeinheit 4 ist vor bzw. in dem Bereich zum Übergang an die Transfervorrichtung 3 jeweils eine in Form einer Einteilungsschnecke ausgebildete Einteilungseinheit vorgesehen, die beispielsweise die Abstände der Behälter B zueinander in einer bereitzustellenden Behältergruppe BG optimal für eine Aufnahme durch die Transfervorrichtung 3 anpasst bzw. einstellt.

Während der Übergabe der Behältergruppe BG mittels der Transfervorrichtung 3 an die Behandlungsmaschine 10 läuft der Transport der Behälter B über die Einlaufvorrichtung 2 kontinuierlich weiter, so dass die Linearzuführeinheit 4 durchgängig immer wieder mit Behältergruppen BG bestückt wird.

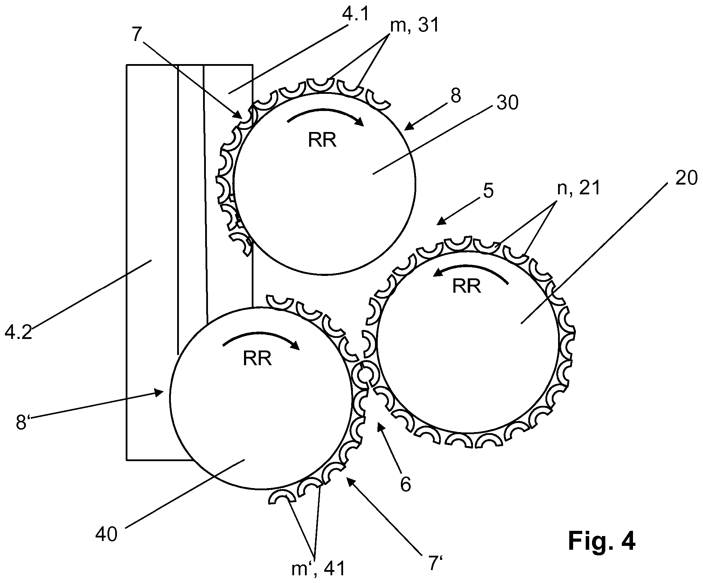

Die Figur 4 zeigt ganz grob schematisch eine Draufsicht auf eine Ausführungsvariante der Einlaufvorrichtung 2 im Übergang zur Linearzuführeinheit 4. Bei dem dargestellten Beispiel ist der zweite Sternverteiler 40 analog zum ersten Sternverteiler 30 ausgebildet und weist zur gruppenweisen Übernahme der Behälter B von der Hauptzuleitungseinheit 20 entlang seines Umfanges wenigstens einen Aufnahmeabschnitt 7' und zumindest einen an den Aufnahmeabschnitt 7' anschließenden Leerabschnitt 8' auf. Der Aufnahmeabschnitt ist dabei 7' mit einer Gruppe von Trag- und Halteelementen 41 besetzt und der Leerabschnitt 8' ist unbesetzt. Eine Anzahl m' an Trag- und Halteelementen 41 in der Gruppe der Trag- und Halteelemente 41 ist wiederum auf die Behälterzahl einer Behältergruppe BG abgestimmt und vorzugsweise identisch zu dieser. Die Anzahl m' der Trag- und Halteelemente 41 einer Gruppe des zweiten Sternverteilers 40 und die Anzahl m der Trag- und Halteelemente 31 einer Gruppe des ersten Sternverteilers 30 sind ebenso gleich.

Aus Gründen der Übersichtlichkeit sind alle Trag- und Halteelemente 21, 31, 41 der Hauptzuleitungseinheit 20 und des ersten und zweiten Sternverteilers 30, 40 lediglich grob schematisch und in rein beispielhaften Zahlen dargestellt. Die Vielzahl der Trag- und Halteelemente 21 beträgt beispielhaft n=22, die jeweils gleichen Anzahlen m, m' der Gruppen an Trag- und Halteelementen 31, 41 betragen je elf. Das Verhältnis n/m bzw. n/m' ist somit zwei. Selbstverständlich können je nach Ausgestaltung der Einzelkomponenten der Einlaufvorrichtung 2, auch andere Verhältnisse, beispielsweise drei oder vier oder fünf sinnvoll sein. Bezogen auf den Umfang der jeweiligen Sternverteiler 30, 40 sind diese beispielhaft jeweils hälftig, also halbumfänglich mit Trag- und Halteelementen 31, 41 besetzt, die andere Hälfte des Umfanges ist unbesetzt. Möglich ist jedoch auch eine andere Anordnung, in der beispielsweise je zwei sich gegenüberliegende Viertel des Umfanges besetzt sind und die jeweiligen dazwischenliegenden Viertel des Umfanges unbesetzt sind oder in der ein Drittel des Umfanges mit Trag- und Halteelementen 31, 41 besetzt und der Rest unbesetzt ist. Auch können die beiden Sternverteiler 30, 40 in Bezug auf die Anordnungen der Aufnahme- und Leerabschnitte 7, 7', 8, 8' unterschiedlich ausgeführt sein.

Gemäß dem vorliegenden Beispiel sind die Trag- und Halteelemente 21, 31, 41 bei dem Hauptzuleitungseinheit 20 und bei den Sternverteilern 30, 40 derart an einem Sternteller befestigt, dass sie jeweils über einen Umfang des Sterntellers hinausragen und quasi nach außen hin über den Umfang des jeweiligen Sterntellers überstehen bzw. umfangsseitig von dem jeweiligen Sternteller nach außen abstehen.

In der dargestellten Position befindet sich der Leerabschnitt 8 des ersten Sternverteilers 30 im ersten Übergabebereich 5, so dass in dieser Position keine Behälter B vom ersten Sternverteiler 30 aufgenommen werden können. Im zweiten Übergabebereich 6, in dem sich der Aufnahmeabschnitt 7' des zweiten Sternverteilers 40 befindet, erfolgt schließlich eine Übergabe von Behältern B, die allerdings in der Figur 4 nicht dargestellt sind.

Mit der vorliegenden Vorrichtung 1 erfolgt vorteilhaft die gruppenweise Entnahme der Behälter B aus dem Behälterstrom auf insbesondere einfache Weise und ergibt sich quasi automatisch, nämlich lediglich durch die rotativen Bewegungen der einzelnen Einheiten der Einlaufvorrichtung 2, und zwar insbesondere ohne dass hierzu eine Steuerung oder Regelung von Trag- und Halteelementen 31, 41 der Sternverteiler 30, 40 notwendig wäre. Für die Trag- und Halteelemente 31, 41 ist dabei keine Verstellung oder Einstellung vorgesehen bzw. notwendig. Die Trag- und Halteelemente 31, 41 werden weder in radialer Richtung noch in einer Richtung entlang des Umfanges bewegt bzw. verstellt und nehmen somit keine unterschiedlichen Arbeitspositionen ein. Gemäß der Erfindung verbleiben die Trag- und Halteelemente 31, 41 in fester Einstellung bzw. in fixierter Position relativ zum Sternteller und können daher besonders vorteilhaft als unbewegliche Trag- und Halteelemente 31, 41 ausgeführt sein.

Nicht in den Figuren dargestellt, aber denkbar sind Ausführungsformen, in denen die Linearzuführeinheit 4 weitere Linearstreckenabschnitte umfasst, wobei in derartigen Ausführungsvarianten weitere Sternverteiler in der Einlaufvorrichtung 2 vorgesehen sein können. Ebenso ist es möglich, dass der zweite Sternverteilers 40 bei einer denkbaren Ausführungsform der Linearzuführeinheit 4 mit nur einem ersten Linearstreckenabschnitt 4.1 alle aufgenommenen Behälter abführt und beispielsweise einer Pufferstrecke zuleitet. In einer weiteren, nicht dargestellten Ausführungsvariante der Vorrichtung 1 ist die Hauptzuleitungseinheit 2 durch ein Einlaufoval gebildet, welches zumindest zwei, parallel zueinander orientierte lineare Transportstreckenabschnitte und zwei sich gegenüberliegende und jeweils die linearen Transportstreckenabschnitte miteinander verbindende Umlenkabschnitte aufweist. Ein derartiges Einlaufoval kann beispielsweise eine Greiferkette umfassen oder eine Transportschiene mit zumindest einem Schlittenelement oder einem Zugmodul, welche mit Trag- und Haltelementen 21 ausgestattet sind. Das Schlittenelement oder Zugmodul weist in einer bevorzugten Ausführungsvariante eine Antriebseinheit, vorzugsweise in Form einer Servomotoreinheit oder eines elektromagnetischen Direktantriebs auf, über welche das Schlittenelement bzw. das Zugmodul gesteuert entlang der zumindest einen Transportschiene bewegt werden können, und zwar auch mehrere Schlittenelemente bzw. Zugmodule neben- bzw. hinereinander. Beispielsweise kann das Schlittenelement oder Zugmodul auf eine vorgebene Geschwindigkeit beschleunigt oder abgebremst werden. Alternativ können diese auch an einer vorgegebenen Stelle angehalten und anschließend wieder angefahren werden.

Die Erfindung wurde voranstehend an Ausführungsbeispielen beschrieben. Es versteht sich, dass zahlreiche Anderungen sowie Abwandlungen möglich sind.

### Bezugszeichenliste

- 1: Vorrichtung
- 2: Einlaufvorrichtung
- 3: Transfervorrichtung
- 4: Linearzuführeinheit
- 4.1: ersten Linearstreckenabschnitt
- 4.2: zweiter Linearstreckenabschnitt
- 5: erster Übergabebereich
- 6: zweiter Übergabebereich
- 7, 7': Aufnahmeabschnitt
- 8, 8': Leerabschnitt

- 10: getaktete Behandlungsmaschine
- 20: Hauptzuleitungseinheit
- 21: Trag- und Halteelemente der Hauptzuleitungseinheit

- 30: erster Sternverteiler
- 31: Trag- und Halteelemente des ersten Sternverteilers

- 40: zweiter Sternverteiler
- 41: Trag- und Halteelemente des zweiten Sternverteilers

- B: Behälter
- BG: Behältergruppe
- ER: Einlaufrichtung
- LZR: Linearzuführrichtung
- m, m': Anzahl an Trag- und Halteelementen in einer Gruppe
- n: Vielzahl an Trag- und Halteelementen
- RR: Rotationsrichtung
- TR: Transferrichtung

## Patentansprüche

1. Vorrichtung (1) zum gruppenweisen Entnehmen von Behältern (B) aus einem kontinuierlichen Behälterstrom und zum Zuführen einer Behältergruppe (BG) mit einer vorgegebenen Behälterzahl an eine getaktete Behandlungsmaschine (10) umfassend wenigstens eine Einlaufvorrichtung (2), zumindest eine Linearzuführeinheit (4) mit wenigstens einem ersten Linearstreckenabschnitt (4.1) und eine Transfervorrichtung (3), wobei die Einlaufvorrichtung (2) wenigstens eine in Form eines Einlaufsterns ausgebildete Hauptzuleitungseinheit (20) und zumindest einen ersten und zweiten Sternverteiler (30, 40) aufweist, wobei die Hauptzuleitungseinheit (20) zum hängenden Transport der Behälter in Form eines kontinuierlichen Behälterstromes eine Vielzahl (n) an Trag- und Halteelementen (21) aufweist und derart eingerichtet und angeordnet ist, dass zur einzelnen Übergabe von Behältern (B) aus dem kontinuierlichen Behälterstrom an den ersten Sternverteiler (30) ein erster Übergabebereich (5) und zur Übergabe von Behältern (B) an den zweiten Sternverteiler (40) ein zweiter Übergabebereich (6) vorgegeben ist, wobei zumindest der erste Sternverteiler (30) dazu eingerichtet ist, die von der Hauptzuleitungseinheit (20) im ersten Übergabebereich (5) aus dem kontinuierlichen Behälterstrom entnommenen Behälter (B) an den ersten Linearstreckenabschnitt (4.1) der Linearzuführeinheit (4) zu übergeben, **dadurch, gekennzeichnet, dass** zumindest der erste Sternverteiler (30) zur gruppenweisen Aufnahme der Behälter aus dem kontinuierlichen Behälterstrom entlang seines Umfanges wenigstens einen Aufnahmeabschnitt (7) mit einer Anzahl (m) an Trag- und Halteelementen (31) aufweist, dass sich an den wenigstens einen Aufnahmeabschnitt (7) des ersten Sternverteilers (30) entlang des Umfanges ein unbesetzter Leerabschnitt (8) zur Unterbrechung der Behälteraufnahme anschließt, und dass die Anzahl (m) der Trag- und Halteelemente (31) des wenigstens einen Aufnahmeabschnittes (7) der vorgegebenen Behälterzahl einer Behältergruppe entspricht.

2. Vorrichtung (1) nach Anspruch 1, **dadurch gekennzeichnet, dass** die Vielzahl (n) der Trag- und Halteelemente (21) der Hauptzuleitungseinheit (20) einem ganzzahligen Vielfachen der Anzahl (m) der Trag- und Halteelemente (31) der Trag- und Halteelementgruppe in dem zumindest einen Aufnahmeabschnitt (7) des ersten Sternverteilers (30) entspricht.

3. Vorrichtung (1) nach Anspruch 1 oder 2, **dadurch gekennzeichnet, dass** der zweite Übergabebereich (6) bezogen auf eine Transportrichtung dem ersten Übergabebereich (5) nachfolgend angeordnet ist und dass der zweite Sternverteiler (40) dazu ausgebildet ist, alle im zweiten Übergabebereich (6) einlaufenden Behälter (B) von der Hauptzuleitungseinheit (20) zu übernehmen und weiter zu transportieren.

4. Vorrichtung (1) nach einem der Ansprüche 1 bis 3, **dadurch gekennzeichnet, dass** die Linearzuführeinheit (4) zumindest einen zweiten Linearstreckenabschnitt (4.2) aufweist, wobei der erste und zweite Linearstreckenabschnitt (4.1, 4.2) parallel zueinander orientiert sind, und dass der zweite Sternverteiler (40) dazu ausgebildet ist die von der Hauptzuleitungseinheit (20) im zweiten Übergabebereich (6) übernommenen Behälter (B) an den zweiten Linearstreckenabschnitt (4.2) der Linearzuführeinheit (4) zu übergeben.

5. Vorrichtung (1) nach einem der vorhergehenden Ansprüche, **dadurch gekennzeichnet, dass** der zweite Sternverteiler (40) durch einen Taschenstern oder einen Zahnstern gebildet ist.

6. Vorrichtung (1) nach einem der vorhergehenden Ansprüche 1 bis 4, **dadurch gekennzeichnet, dass** der zweite Sternverteiler (40) zur gruppenweisen Übernahme der Behälter (B) von der Hauptzuleitungseinheit (20) entlang seines Umfanges wenigstens einen Aufnahmeabschnitt (7') und zumindest einen an den Aufnahmeabschnitt (7') anschließenden Leerabschnitt (8') aufweist, wobei der Aufnahmeabschnitt (7') mit einer Gruppe von Trag- und Halteelementen (41) besetzt ist und der Leerabschnitt (8') unbesetzt ist, und wobei eine Anzahl (m') an Trag- und Halteelementen (41) in der Gruppe der Trag- und Halteelemente (41) auf die Behälterzahl einer Behältergruppe abgestimmt ist.

7. Vorrichtung (1) nach einem der vorhergehenden Ansprüche, **dadurch gekennzeichnet, dass** im Bereich der Linearstreckenabschnitte (4.1, 4.2) Einteilungseinheiten vorgesehen sind, wobei die Einteilungseinheiten vor oder innerhalb eines Übergangs zwischen der Linearzuführeinheit (4) und der Transfervorrichtung (3) angeordnet sind.

8. Vorrichtung (1) nach Anspruch 7, **dadurch gekennzeichnet, dass** die Einteilungseinheiten durch Einteilungsschnecken oder durch Taschenketten gebildet sind.

9. Vorrichtung (1) nach einem der vorhergehenden Ansprüche, **dadurch gekennzeichnet, dass** der erste und /oder zweite Sternverteiler (30, 40) über mehrere Aufnahmeabschnitte (7, 7') verfügt, wobei jeder Aufnahmeabschnitt (7, 7') eine Gruppe mit einer der Behälterzahl einer Behältergruppe entsprechenden Anzahl (m, m') an Trag- und Halteelementen (31, 41) aufweist und wobei jeweils ein Leerabschnitt (8, 8') zwischen jeweils zwei Aufnahmeabschnitten (7, 7') angeordnet ist.

10. Vorrichtung (1) nach einem der vorhergehenden Ansprüche, **dadurch gekennzeichnet, dass** die Transfervorrichtung (2) als getaktete Transfervorrichtung ausgebildet und dazu eingerichtet ist jeweils eine Behältergruppe von der Linearzuführeinheit (4) in die getaktete Behandlungsmaschine (10) zu transferieren.

11. Verfahren zum gruppenweisen Entnehmen von Behältern aus einem kontinuierlichen Behälterstrom und zum Zuführen von Behältergruppen (BG) an eine getaktete Behandlungsmaschine (10), bei dem die Behälter (B) mittels einer in Form eines Einlaufsterns ausgebildeten Hauptzuleitungseinheit (20) in einem kontinuierlichen Behälterstrom entlang einer Einlaufrichtung (ER) hängend transportiert werden und bei dem eine Behältergruppe (BG) mit einer vorgegebenen Behälterzahl mittels eines in Einlaufrichtung (ER) hinter der Hauptzuleitungseinheit (20) angeordneten ersten Sternverteilers (30) aus dem Behälterstrom entnommen und auf einen ersten Linearstreckenabschnitt (4.1) einer Linearzuführeinheit (4) übergeben wird und wobei die auf der Linearzuführeinheit (4) bereitgestellte Behältergruppe (BG) anschließend für die Übergabe an eine getaktete Behandlungsmaschine (10) von einer Transfervorrichtung (3) aufgenommen wird, **dadurch gekennzeichnet, dass** die Behälter gruppenweise aus dem kontinuierlichen Behälterstrom mittels zumindest einen sich entlang des Umfanges des ersten Sternverteilers (30) erstreckenden und eine vorgegebene Anzahl von Trag- und Halteelementen (31) aufweisenden Aufnahmeabschnittes (7) in einem ersten Übergabebereich (5) entnommen werden, wobei mittels zumindest einem sich an den Aufnahmeabschnitt (7) anschließenden, sich ebenfalls entlang des Umfanges erstreckenden Leerabschnitt (8) des ersten Sternverteilers (30) die Behälterentnahme unterbrochen wird und die an der Hauptzuleitungseinheit (20) verbleibenden Behälter (B) in einem zweiten, dem ersten Übergabebereich (5) in Transportrichtung nachfolgenden Übergabebereich (6) an den zweiten Sternverteiler (40) übergeben werden.

12. Verfahren nach Anspruch 11, **dadurch gekennzeichnet, dass** die Behälter mittels des Aufnahmeabschnittes (7) gruppenweise und diskontinuierlich von der Hauptzuleitungseinheit (20) entnommen werden.

13. Verfahren nach Anspruch 11 oder 12, **dadurch gekennzeichnet, dass** aufgrund der Rotation des ersten Sternverteilers (30) der Aufnahmeabschnitt (7) und daran anschließende Leerabschnitt (8) abwechselnd den ersten Übergabebereich (5) durchlaufen.

14. Verfahren nach einem der Ansprüche 11 bis 13, **dadurch gekennzeichnet, dass** die vom zweiten Sternverteiler (40) aufgenommenen Behälter (B) an einen zweiten Linearstreckenabschnitt (4.2) der Linearzuführeinheit (4) übergeben werden.

15. Verfahren nach Anspruch 14, **dadurch gekennzeichnet, dass** die Behältergruppen (BG) durch die Transfervorrichtung (3) abwechselnd und getaktet von jeweils einem der Linearstreckenabschnitte (4.1, 4.2) aufgenommen werden.

## Claims

1. Device (1) for removing containers (B) in groups from a continuous container flow and for supplying a container group (BG) with a predetermined number of containers to a clocked processing machine (10), comprising at least one entry device (2), at least one linear feeding unit (4) having at least one first linear section (4.1), and a transfer device (3), wherein the entry device (2) comprises a main supplying unit (20), configured in the form of an inlet star, and at least one first and second star distributors (30, 40), wherein the main supplying unit (20) comprises a plurality (n) of supporting and retaining elements (21) for the hanging transport of the containers in the form of a continuous container flow, and is designed and arranged in such a way that a first transfer region (5) is formed for the individual transfer of containers (B) from the container flow to the first star distributor (30), and a second transfer region (6) is formed for the transfer of containers (B) to the second star distributor (40), wherein at least the first star distributor (30) is configured such as to transfer the containers (B) removed from the continuous container flow from the main supplying unit (20) in the first transfer region (5) to the first linear section (4.1) of the linear feeding unit (4), **characterised in that** at least the first star distributor (30) has at least one receiving section (7), having a number (m) of supporting and retaining elements (31) for receiving the containers from the continuous container flow along its periphery, that the at least one receiving section (7) of the first star distributor (30) is adjoined by an unoccupied empty section (8) for interrupting the receiving of containers, and that the number (m) of the supporting and retaining elements (31) of the at least one receiving section (7) corresponds to the predetermined number of a container group.

2. Device (1) according to claim 1, **characterised in that** the plurality (n) of the supporting and retaining elements (21) of the main supplying unit (20) corresponds to a whole-number multiple of the number (m) of the supporting and retaining elements (31) of the supporting and retaining group in the at least one receiving section (7) of the first star distributor (30).

3. Device (1) according to claim 1 or 2, **characterised in that** the second transfer region (6) is arranged downstream of the first transfer region (5) in relation to a transport direction, and that the second star distributor (40) is configured such as to receive all the containers (B) running into the second transfer region (6) from the main supplying unit (20) and transport them onwards.

4. Device (1) according to any one of claims 1 to 3, **characterised in that** the linear section (4) comprises at least one second linear section (4.2), wherein the first and second linear sections (4.1, 4.2) are oriented parallel to one another, and that the second star distributor (40) is configured in such a way as to transfer the containers (B) which are received from the main supplying unit (20) in the second transfer region (6) to the second linear section (4.2) of the linear section (4).

5. Device (1) according to any one the preceding claims, **characterised in that** the second star distributor (40) is formed by a pocket star or a toothed star.

6. Device (1) according to any one the preceding claims 1 to 4, **characterised in that** the second star distributor (40) comprises at least receiving section (7') for the receiving of groups of containers (B) from the main supplying unit (20) along its periphery, and at least one unoccupied section (8') adjoining the receiving section (7'), wherein the receiving section (7') is occupied by a group of supporting and retaining elements (41) and the empty section (8') is unoccupied, and wherein a number (m') of supporting and retaining elements (41) in the group of supporting and retaining elements (41) is matched to the number of containers of a container group.

7. Device (1) according to any one the preceding claims, **characterised in that** dividing units are provided in the region of the linear sections (4.1, 4.2), wherein the dividing units are arranged before or inside a transfer between the linear feeding unit (4) and the transfer device (3).

8. Device (1) according to claim 7, **characterised in that** the dividing units are formed by dividing worm units or by pocket chains.

9. Device (1) according to any one the preceding claims, **characterised in that** the first and/or second star distributors (30, 40) is provided with several receiving sections (7, 7'), wherein each receiving section (7, 7') comprises a group with a number (m, m') of supporting and retaining elements (31, 41) which corresponds to the number of containers of a container group, and wherein in each case an unoccupied section (8, 8') is arranged between every two receiving sections (7. 7').

10. Device (1) according to any one the preceding claims, **characterised in that** the transfer device (2) is configured as a clocked transfer device, and is also configured in each case such as to transfer a container group from the linear feeding unit (4) into the clocked processing machine (10).

11. Method for removing containers in groups from a continuous container flow and for supplying container groups (BG) to a clocked processing machine (10), wherein the containers (B) are transported hanging along a feed direction (ER) by means of a main supplying unit (20), configured in the form of an inlet star, in a continuous container flow, and wherein a container group (BG) with a predetermined number of containers are removed from the container flow by means of a first star distributor (30) arranged behind the main supplying unit (20) in the feed direction (ER) and are transferred onto a first linear section (4.1) of a linear feeding unit (4), and wherein the container group (BG) provided on the linear unit (4) is then received by a transport device (3) for transfer to a clocked processing machine (10), **characterised in that** the containers are removed in groups from the continuous container flow by means of at least one receiving section (7), extending along the periphery of the first star distributor (30) and comprising a predetermined number of supporting and retaining elements (31), in a first transfer region (5), wherein, by means of at least one unoccupied section (8) of the first star distributor (30), adjoining the receiving section (7) and likewise extending along the periphery, the container removal is interrupted, and the container (B) remaining in the main supplying unit (20) are transferred to the second star distributor (40) in a transfer region (6) following the first transfer region (5) in the transport direction.

12. Method according to claim 11, **characterised in that** the containers are removed in groups and discontinuously from the main supplying unit (20) by means of the receiving section (7).

13. Method according to claim 11 or 12, **characterised in that**, due to the rotation of the first star distributor (30), the receiving section (7) and then, following this, the adjacent unoccupied section (8) alternately run through the first transfer region (5).

14. Method according to any one of claims 11 to 13, **characterised in that** the containers (B) removed from the second star distributor (40) are transferred to a second linear section (4.2) of the linear feeding unit (4).

15. Method according to claim 14, **characterised in that** the container groups (BG) are received by the transfer device (3) alternately and in a clocked manner in each case from one of the linear sections (4.1, 4.2).

## Revendications

1. Dispositif (1) destiné à prélever par groupes des contenants (B) d'un flux de contenants continu et à amener un groupe de contenants (BG) avec un nombre de contenants prédéfini à une machine de traitement (10) cadencée comprenant au moins un dispositif d'entrée (2), au moins une unité d'amenée linéaire (4) avec au moins un premier tronçon linéaire (4.1) et un dispositif de transfert (3), dans lequel le dispositif d'entrée (2) présente au moins une unité d'acheminement principale (20) réalisée sous la forme d'une étoile d'entrée et au moins un premier et un deuxième répartiteur en étoile (30, 40), dans lequel l'unité d'acheminement principale (20) présente pour le transport suspendu des contenants sous la forme d'un flux de contenants continu une pluralité (n) d'éléments de support et de maintien (21) et est mise au point et disposée de manière à prédéfinir, pour le transfert individuel de contenants (B) depuis le flux de contenants continu au premier répartiteur en étoile (30), une première zone de transfert (5) et, pour le transfert de contenants (B) au deuxième répartiteur en étoile (40), une deuxième zone de transfert (6), dans lequel au moins le premier répartiteur en étoile (30) est mis au point pour transférer les contenants (B) prélevés du flux de contenants continu dans la première zone de transfert (5) par l'unité d'acheminement principale (20) au premier tronçon linéaire (4.1) de l'unité d'amenée linéaire (4), **caractérisé en ce qu'**au moins le premier répartiteur d'étoile (30) présente pour recevoir par groupes les contenants provenant du flux de contenants continu, le long de sa périphérie, au moins un tronçon de réception (7) avec un nombre (m) d'éléments de support et de maintien (31), qu'un tronçon vide (8) inoccupé destiné à interrompre la réception de contenants se raccorde à l'au moins un tronçon de réception (7) du premier répartiteur en étoile (30) le long de sa périphérie, et que le nombre (m) des éléments de support et de maintien (31) de l'au moins un tronçon de réception (7) correspond au nombre de contenants prédéfini d'un groupe de contenants.

2. Dispositif (1) selon la revendication 1, **caractérisé en ce que** la pluralité (n) des éléments de support et de maintien (21) de l'unité d'acheminement principale (20) correspond à un multiple en nombre entier du nombre (m) des éléments de support et de maintien (31) du groupe d'éléments de support et de maintien dans l'au moins un tronçon de réception (7) du premier répartiteur en étoile (30).

3. Dispositif (1) selon la revendication 1 ou 2, **caractérisé en ce que** la deuxième zone de transfert (6) est disposée de manière à suivre la première zone de transfert (5) par rapport à une direction de transport, et que le deuxième répartiteur en étoile (40) est réalisé pour prendre en charge tous les contenants (B) entrant dans la deuxième zone de transfert (6) par l'unité d'acheminement principale (20) et pour continuer à les transporter.

4. Dispositif (1) selon l'une quelconque des revendications 1 à 3, **caractérisé en ce que** l'unité d'amenée linéaire (4) présente au moins un deuxième tronçon linéaire (4.2), dans lequel le premier et le deuxième tronçon linéaire (4.1, 4.2) sont orientés de manière parallèle l'un par rapport à l'autre, et que le deuxième répartiteur en étoile (40) est réalisé pour transférer les contenants (B) pris en charge par l'unité d'acheminement principale (20) dans la deuxième zone de transfert (6) au deuxième tronçon linéaire (4.2) de l'unité d'amenée linéaire (4).

5. Dispositif (1) selon l'une quelconque des revendications précédentes, **caractérisé en ce que** le deuxième répartiteur en étoile (40) est formé par une étoile à poches ou une étoile à dents.

6. Dispositif (1) selon l'une quelconque des revendications 1 à 4, **caractérisé en ce que** le deuxième répartiteur en étoile (40) présente, pour prendre en charge par groupes les contenants (B) par l'unité d'acheminement principale (20) le long de sa périphérie, au moins un tronçon de réception (7') et au moins un tronçon vide (8') se raccordant au tronçon de réception (7'), dans lequel le tronçon de réception (7') est occupé par un groupe d'éléments de support et de maintien (41) et le tronçon vide (8') est inoccupé, et dans lequel un nombre (m') d'éléments de support et de maintien (41) dans le groupe des éléments de support et de maintien (41) est assorti au nombre de contenants d'un groupe de contenants.

7. Dispositif (1) selon l'une quelconque des revendications précédentes, **caractérisé en ce que** sont prévues dans la zone des tronçons linéaires (4.1, 4.2) des unités de répartition, dans lequel les unités de répartition sont disposées avant ou à l'intérieur d'un passage entre l'unité d'amenée linéaire (4) et le dispositif de transfert (3).

8. Dispositif (1) selon la revendication 7, **caractérisé en ce que** les unités de répartition sont formées par des vis sans fin de répartition ou par des chaînes à poches.

9. Dispositif (1) selon l'une quelconque des revendications précédentes, **caractérisé en ce que** le premier et/ou le deuxième répartiteur en étoile (30, 40) disposent de plusieurs tronçons de réception (7, 7'), dans lequel chaque tronçon de réception (7, 7') présente un groupe avec un nombre (m, m') d'éléments de support et de maintien (31, 41) correspondant au nombre de contenants d'un groupe de contenants et dans lequel respectivement un tronçon vide (8, 8') est disposé entre respectivement deux tronçons de réception (7, 7').

10. Dispositif (1) selon l'une quelconque des revendications précédentes, **caractérisé en ce que** le dispositif de transfert (2) est réalisé en tant que dispositif de transfert cadencé et est mis au point pour transférer respectivement un groupe de contenants depuis l'unité d'amenée linéaire (4) dans la machine de traitement (10) cadencée.

11. Procédé pour prélever par groupes des contenants d'un flux de contenants continu et pour amener des groupes de contenants (BG) à une machine de traitement (10) cadencée, où les contenants (B) sont transportés de manière suspendue le long d'une direction d'entrée (ER) dans un flux de contenants continu au moyen d'une unité d'acheminement principale (20) réalisée sous la forme d'une étoile d'entrée et où un groupe de contenants (BG) avec un nombre de contenants prédéfini est prélevé du flux de contenants au moyen d'un premier répartiteur en étoile (30) disposé dans la direction d'entrée (ER) derrière l'unité d'acheminement principale (20) et est transféré à une unité d'amenée linéaire (4) sur un premier tronçon linéaire (4.1) et dans lequel le groupe de contenants (BG) fourni sur l'unité d'amenée linéaire (4) est ensuite reçu par un dispositif de transfert (3) pour le transfert à une machine de traitement (10) cadencée, **caractérisé en ce que** les contenants sont prélevés par groupes du flux de contenants continu au moyen d'au moins un tronçon de réception (7) s'étendant le long de la périphérie du premier répartiteur en étoile (30) et présentant un nombre prédéfini d'éléments de support et de maintien (31) dans une première zone de transfert (5), dans lequel le prélèvement de contenants est interrompu au moyen d'au moins un tronçon vide (8), se raccordant au tronçon de réception (7), s'étendant également le long de la périphérie, du premier répartiteur en étoile (30) et les contenants (B) restant sur l'unité d'acheminement principale (20) sont transférés au deuxième répartiteur en étoile (40) dans une deuxième zone de transfert (6) suivant la première zone de transfert (5) dans la direction de transport.

12. Procédé selon la revendication 11, **caractérisé en ce que** les contenants sont prélevés par groupes et en discontinu par l'unité d'acheminement principale (20) au moyen du tronçon de réception (7).

13. Procédé selon la revendication 11 ou 12, **caractérisé en ce qu'**en raison de la rotation du premier répartiteur en étoile (30), le tronçon de réception (7) et le tronçon vide (8) s'y raccordant traversent en alternance la première zone de transfert (5).

14. Procédé selon l'une quelconque des revendications 11 à 13, **caractérisé en ce que** les contenants (B) reçus par le deuxième répartiteur en étoile (40) sont transférés à un deuxième tronçon linéaire (4.2) de l'unité d'amenée principale (4).

15. Procédé selon la revendication 14, **caractérisé en ce que** les groupes de contenants (BG) sont reçus en alternance par le dispositif de transfert (3) et de manière cadencée par respectivement un des tronçons linéaires (4.1, 4.2).
